# EUROPÄISCHE PATENTSCHRIFT

(11) **EP 0 698 645 B1**
(45) Veröffentlichungstag und Bekanntmachung des Hinweises auf die Patenterteilung: **28.02.2001**
(21) Anmeldenummer: 95112092.2
(22) Anmeldetag: 01.08.1995
(51) Int. Cl.: C09D 167/00, C09D 5/03

(54) **Wärmehärtbare Beschichtungsmassen**
Heat-curable coating compositions
Compositions de revêtement thermodurcissables

(30) Priorität: 26.08.1994 DE 4430400
(43) Veröffentlichungstag der Anmeldung: 28.02.1996
(73) Patentinhaber: EMS-INVENTA AG, 8001 Zürich (CH)
(72) Erfinder: Hoppe, Manfred, Dr. rer. nat., CH-7000 Chur (CH); Kaplan, Andreas, Dr. rer. nat., CH-7000 Chur (CH); Gisler, René, Dipl.-Chem., CH-7000 Chur (CH)
(74) Vertreter: Becker Kurig Straus

(56) Entgegenhaltungen:
- EP-A- 0 520 429
- WO-A-91/14745
- US-A- 4 801 680
- US-A- 5 264 529
- DATABASE WPI Week 8921 Derwent Publications Ltd., London, GB; AN 89-156134 & JP-A-01 098 671 (NIPPON ESTER KK) , 17.April 1989

## Beschreibung

Die Erfindung betrifft den in dem Patentanspruch angegebenen Gegenstand.

Die Erfindung betrifft insbesondere ein Verfahren zur Herstellung von epoxidfreien, wärmehärtbaren Pulverlacken für Beschichtungen mit matten Oberflächen.

Wärmehärtbare Pulverlacke geben bei der Applikation keine organischen Lösungsmittel ab und besitzen deshalb gegenüber Flüssiglacken eindeutig ökologische Vorteile. Die Vernetzung in der Wärme erfolgt über Polyadditions- oder Polykondensationsreaktionen zwischen den in den Bindemitteln enthaltenen funktionellen Gruppen. Typische Bindemittelsysteme sind Epoxidharze/härter, Carboxyl-Polyester/Epoxide,Hydroxyl-Polyester/lsocyanate, Hydroxyl-Acrylate/lsocyanate, Carboxyl-Acrylate/Epoxide, Epoxid-Acrylate/Dicarbonsäuren, Carboxyl-Polyester oder -Acrylate/β-Hydroxyalkylamide u.a. Die verschiedenen Bindemittelsysteme unterscheiden sich neben den lacktechnischen Eigenschaften besonders in der Beständigkeit bei Außenbewitterung, besitzen jedoch gemeinsam hochglänzende Oberflächen, d.h. einen Glanzgrad von > ca. 80 (DIN 67530, Einstrahlwinkel 60 °).

Es besteht heute vermehrt ein Bedarf an Pulverlacken mit halbmatten oder matten Oberflächen mit einem Glanzgrad nach DIN 67530 von > 60 bei einem Einstrahlwinkel von 60 ° und guter Witterungsbeständigkeit für Anwendungen, z.B. im Architektur-, Automobil- und Möbelbereich etc.

Die in der Flüssiglackindustrie üblichen Mattierungsadditive, wie z.B. Kreiden, feindisperse Kieselsäuren, Talkum etc. zeigen in Pulverlacken nur einen sehr geringen Mattierungseffekt und bewirken in größeren Zusatzmengen eine unzulässige Verschlechterung der lacktechnischen Eigenschaften. Mit dem Bindemittel unverträgliche Additive, wie z.B. Wachse etc. lassen sich zwar sogenannte seidenglänzende Oberflächen (Glanzgrad nach DIN 67530 bei einem Einstrahlwinkel von 60 ° > 60) erreichen, doch führt die Anreicherung der unverträglichen Additive an der Oberfläche zu in der Praxis nicht erwünschten Effekten.

In US-A-3,842,035 wird deshalb vorgeschlagen, matte Pulverlacküberzüge durch sogenanntes Dryblending von fertigen Pulverlacken mit genügend unterschiedlicher Reaktivität, d.h. von Pulverlacken mit sehr kurzen und sehr langen Gelierzeiten, herzustellen. Die verwendten Bindemittel sind Acrylharze, Alkydharze und vorzugsweise Epoxidharze.

In WO-A-89/06674 wird die Herstellung seidenglänzender oder matter Oberflächen durch Dryblending, also physikalischer Mischungen von fertigen Pulverlacken, beschrieben, die aus unterschiedlichen Bindemittelsystemen zusammengesetzt sind.

In DE-A-2 324 696 wird ein Verfahren zur Herstellung matter Überzüge durch Verwendung eines mit Epoxidgruppen reagierenden Spezialhärters, das Salz von cyclischen Amidinen mit bestimmten Polycarbonsäuren, vorgeschlagen. Die Vernetzung des Pulverlacks erfolgt nach diesem Verfahren mit unterschiedlicher Reaktivität bei verschiedenen Temperaturen, wodurch sich an der Oberfläche Mikrostrukturen ausbilden, die eine matte Oberfläche ausweisen. Die Anwendung dieses Verfahrens beschränkt sich jedoch auf Epoxid- und Carboxyl-Polyester/Epoxid-Pulverlacke, weshalb nach diesem Verfahren keine Überzüge mit genügender Witterungsbeständigkeit hergestellt werden können.

In EP-A-366 608 B1 wird ebenfalls ein Verfahren zur Herstellung von Pulverlacken mit matten Oberflächen vorgeschlagen. Es betrifft Pulverlacke auf Basis von Epoxidharzen oder Epoxidverbindungen, wie z.B. Triglycidylisocyanurat (TGIC) mit carboxylterminierten Polyesterharzen und Gemischen aus Di-, Tri- oder Tetrakis-(β-carboxyethyl)-cyclohexanonen oder -cyclopentanonen. Der Matteffekt wird hier auf die unterschiedliche Reaktivität zwischen den aliphatischen Carboxylgruppen des Vernetzers und den aromatischen Carboxylgruppen des carboxylterminierten Polyesterharzes zurückgeführt.

Eine andere Patentschrift, DE-A-3 232 463, beschreibt Pulverlacke mit matten Oberflächen durch gemeinsame Extrusion von hydroxylterminierten Polyesterharzen, Epoxidverbindungen, wie z.B. TGIC und speziellen reversibel blockierten Polyisocyanaten mit freien Carboxylgruppen.

US-A-4,801,680 beschreibt einen wärmehärtbaren Pulverlack, der aus einer Teilchenmischung aus einem carboxylgruppenhaltigen Polyester und einem β-Hydroxyalkylamid besteht. Dieser Pulverlack führt nach der Aufbringung auf einem Träger zu glänzenden Lackoberflächen. Gemäß Beispiel 2 von US-A-4,801,680 zeigen die erhaltenen Lackoberflächen nach Durchführung eines beschleunigten Bewitterungstests und unter Einsatz von UV-Bestrahlung keine Beeinträchtigung der Lackoberfläche.

EP-A-520429 beschreibt eine Harzzusammensetzung aus Polyestern mit unterschiedlichen Hydroxylzahlen. Die beschriebene Harzzusammensetzung umfaßt zwingend einen im wesentlichen ungelierten Polyester A, einen im wesentlichen ungelierten Polyester B, Tetramethoxymethylglycoluril als Härtungsmittel und eine organische Sulfonsäure als Katalysator.

Aufgabe der vorliegenden Erfindung ist es nun, ein Verfahren zur Herstellung von epoxidfreien, wärmehärtbaren Pulverlacken zu entwickeln, die toxikologisch absolut unbedenklich sind und zur Herstellung von witterungsbeständigen Schutzschichten mit matten Oberflächen verwendet werden können.

Diese Aufgabe wird durch das Verfahren gemäß Anspruch 1, gelöst.

Die Erfindung betrifft daher insbesondere ein Verfahren zur Herstellung einer Trockenmischung (Dryblend) von mindestens zwei Pulverlacken auf Basis chemisch gleichartiger Systeme, nämlich von carboxylterminierten Polyesterharzen und β-Hydroxyalkylamiden als Vernetzer, die sich in der Funktionalität unterscheiden.

In der EP-0 582 363 A1 und der WO-A-94/03545, die Pulverlacke auf Basis von carboxylterminierten Polyesterharzen und β-Hydroxyalkylamiden als Vernetzer beschrieben, wird bereits vorgeschlagen, anstelle von tetrafunktionellen β-Hydroxyalkylamiden Gemische mit einer Funktionalität von > 3 und < 3 zu verwenden, doch ist das Ziel bzw. das Ergebnis dieser Dokumente nicht die Herstellung von Pulverlacken mit matten Oberflächen, sondern das Erzielen von besseren Oberflächen, auch in größeren Schichtdicken ohne Micropinholes (Blister). Nach den Vorschriften dieser beiden Patentschriften, d.h. durch gemeinsame Extrusion aller Komponenten hergestellte Pulverlacke, weisen einen hohen Glanzgrad nach DIN 67530 von > 80 bei einem Einstrahlwinkel von 60 ° auf.

Im Gegensatz dazu werden nach dem erfindungsgemäßen Verfahren, d.h. durch "Dryblending" von fertigen Pulverlacken auf Basis von carboxylterminierten Polyesterharzen und β-Hydroxyalkylamiden mit unterschiedlicher Funktionalität Pulverlacke mit optisch sehr schönen, aber matten Oberflächen mit einem Glanzgrad nach DIN 67530 (60 °) von < 40 erhalten. Der Glanzgrad läßt sich noch weiter vermindern, wenn die verwendeten carboxylterminierten Polyesterharze ebenfalls eine unterschiedliche Funktionalität aufweisen.

Als carboxylterminierte Polyesterharze sind für die erfindungsgemäßen Pulverlacken solche geeignet, die Säurezahlen von 20 bis 200 mg KOH/g, vorzugsweise zwischen 20 und 120, OH-Zahlen < 10 mg KOH/g und Glasumwandlungstemperaturen von > 40 °C aufweisen.

Die Herstellung dieser carboxylterminierten Polyesterharze erfolgt nach bekannten Verfahren durch Veresterung oder Umesterung von zwei- und/oder mehrwertigen linearen oder verzweigten, aliphatischen oder cycloaliphatischen Polyolen mit mehrwertigen, vorzugsweise zwei- oder mehrwertigen aliphatischen, cycloaliphatischen oder aromatischen Carbonsäuren oder deren Ester in Gegenwart eines Veresterungs- oder Umesterungskatalysators bei Temperaturen bis ca. 250 °C und gegen Ende unter vermindertem Druck.

Bevorzugte Polyole sind 2,2-Dimethyl-1,3-propandiol (Neopentylglykol), Ethylenglykol, 1,4-Butandiol, 1,6-Hexandiol, 1,4-Dimethylolcyclohexan, 2,2-[Bis (4-hydroxycyclohexyl)]propan, Diethylenglykol, Dipropylenglykol, Glycerin, Pentaerythritol u.a. Vorzugsweise enthält die Polyol-Komponente wenigstens 50 Mol-% Neopentylglykol.

Bevorzugte mehrwertige Carbonsäuren sind Terephthalsäure, Isophthalsäure, Trimellithsäure, Adipinsäure, 1,4-Cyclohandicarbonsäure u.a. Die Funktionalität der carboxylterminierten Polyesterharze wird über das Verhältnis von zwei- und mehr als zweiwertigen Polyolen oder Carbonsäuren eingestellt.

Die im erfindungsgemäßen Verfahren eingesetzten β-Hydroxyalkylamide müssen mindestens zwei β-Hydroxyalkylamidgruppen pro Molekül enthalten und sind im wesentlichen durch folgende Formel (1) charakterisiert: 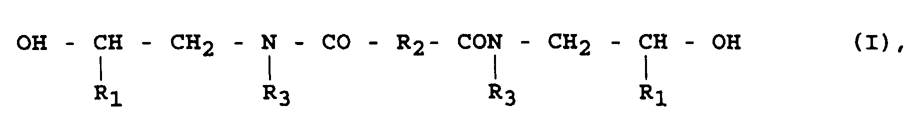 worin bedeuten
- R₁: gleiche oder verschiedene Alkylreste mit 1 bis 4 C-Atomen oder Wasserstoff
- R₂: ein aliphatischer, cycloaliphatischer, araliphatischer oder aromatischer Rest
- R₃: 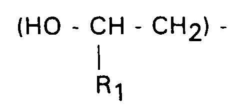 oder gleiche oder unterschiedliche Alkylreste mit 1 bis 4 C-Atomen oder Wasserstoff.

Besonders bevorzugte β-Hydroxyalkylamide sind:
- N,N'-Di(β-hydroxyethyl)acetamid
- Bis (β-hydroxyethyl)adipamid
- Bis (β-hydroxypropyl)adipamid
- Bis [N,N'-di(β-hydroxyethyl)]adipamid
- Bis [N,N'-di(β-hydroxypropyl)]adipamid.

Die Herstellung der β-Hydroxyalkylamide erfolgt in bekannter Weise durch Umsatz der Ester der entsprechenden Carbonsäure mit Alkanolaminen in der Wärme.

Zur Erreichung guter lacktechnischer Eigenschaften liegt das Verhältnis von β-Hydroxyalkylamidgruppen zu den Carboxylgruppen der erfindungsgemäßen carboxylterminierten Polyesterharze vorteilhaft zwischen 0,5 bis 1,5, vorzugsweise zwischen 0,8 bis 1,2.

Die erfindungsgemäß hergestellten epoxidfreien, wärmehärtbaren und toxikologisch einwandfreien Pulverlacke bestehen somit aus einer Trockenmischung (Dryblend) von mindestens zwei Pulverlacken auf Basis
- eines carboxylterminierten Polyesters mit einer Säurezahl von 20 bis 200 mg KOH/g, bevorzugt von 20 bis 120 mg/KOH/g und einer Glasumwandlungstemperatur von mindestens 40 °C,
- einem β-Hydroxylalkylamid mit mehr als zwei β-Hydroxylalkylamidgruppen oder Gemischen davon mit unterschiedlicher Funktionalität,
- sowie gegebenenfalls weiteren, für Pulverlacke üblichen Additive, wie z.B. Benetzungs-, Verlaufs- oder Entgasungsmittel, Hitze- oder UV-Stabilisatoren, Pigmente, Farbstoffe, Füllstoffe etc.,
wobei sich die zwei Pulverlacke in der Funktionalität und dadurch auch in der Reaktivität unterscheiden.

Die Herstellung jedes der für die erfindungsgemäßen Pulverlacke erforderlichen Ausgangs-pulverlacke erfolgt vorzugsweise in der Schmelze durch gemeinsame Extrusion sämtlicher Komponenten bei Temperaturen zwischen 80 bis 130 °C. Das Extrudat wird anschließend abgekühlt, gemahlen und auf eine Korngröße von < 90 µm abgesiebt. Zur Erzielung des erfindungsgemässen Effekts, nämlich der Ausbildung von matten Oberflächen mit einem Glanzgrad nach DIN 67530 von < 40 bei einem Einstrahlwinkel von 60 °, werden die fertigen Pulverlacke, die sich in der Funktionalität und Reaktivität unterscheiden, in einem Intensivmischer zu einem Dryblend vermischt. Der erreichbare Glanzgrad ist abhängig vom Mischverhältnis der unterschiedlichen Pulverlacke und ist in den meisten Fällen am niedrigsten bei gleichen Gewichtsanteilen.

Die Verwendung der Pulverlacke erfolgt nach für Pulverlacke üblichen Verfahren, z.B. mittels einer elektrostatischen Pulverlacksprühvorrichtung nach dem triboelektrischen oder Corona-Verfahren oder nach dem Wirbelbett-Verfahren etc.

Bei normalen Umgebungstemperaturen besitzt das erfindungsgemäß hergestellte Beschichtungssystem eine gute Lagerstabilität und zeigt nach der Vernetzung zwischen 150 bis 220 °C gute lacktechnische Eigenschaften, glatte Oberflächen und die beschriebenen geringen Glanzgrade.

Die folgenden Beispiele und die Tabellen 1 und 2 charakterisieren die Herstellung der Bindemittelkomponenten und die Eigenschaften des Beschichtungssystems.

### Beispiel 1 : Polyester A

In einem 2 ℓ Veresterungsreaktor, versehen mit Temperaturfühler, Rührer, Rückflußkolonne und Destillationsbrücke werden 406,2 g (3,90 Mol) Neopentylglykol und 19,2 g (0,31 Mol) Ethylenglykol vorgelegt und bei 140 °C unter einer während der ganzen Reaktion aufrechtgehaltenen N₂-Atmosphäre aufgeschmolzen. Unter Rühren werden dann 616,0 g (3,71 Mol) Terephthalsäure und 0,6 g Veresterungskatalysator zugegeben. Nach schrittweiser Erhöhung der Innentemperatur auf 235 °C wird die Reaktion solange fortgesetzt, bis kein Destillat mehr entsteht. Anschließend werden 100,0 g (0,60 Mol) Isophthalsäure und 13,3 g (0,09 Mol) Adipinsäure zugegeben und solange verestert bis der gewünschte Säurezahlbereich von 30 bis 36 mg KOH/g erreicht ist. Ein Teil dieser zweiten Stufe wird eventuell unter vermindertem Druck ( < 100 mbar) durchgeführt. Der erhaltene Polyester hat eine Säurezahl von 34 mg KOH/g, eine ICI-Schmelzviskosität bei 160 °C von 37 Pas und einen TG (DSC) von 64 °C. Die Carboxyl-Funktionalität ist 2,0.

### Beispiel 2 : Polyester B

Analog Beispiel 1 werden in einer ersten Stufe 417,2 g (4,00 Mol) Neopentylglykol, 19,2 g (0,31 Mol) Ethylenglykol und 600,0 g (3,61 Mol) Terephthalsäure verestert. Als zweite Stufe werden 86,2 g (0,52 Mol) Isophthalsäure und 33,5 g (0,23 Mol) Adipinsäure zugegeben. Der nach dem in Beispiel 1 beschriebenen Verfahren erhaltene Polyester hat eine Säurezahl von 22 mg KOH/g, eine ICI-Schmelzviskosität bei 160 °C von 53 Pas und einen TG (DSC) von 63 °C. Die Carboxyl-Funktionalität ist 2,0.

### Beispiel 3 : Polyester C

Analog Beispiel 1 werden in einer ersten Stufe 320,0 g (3,07 Mol) Neopentylglykol, 57,0 g (0,92 Mol) Ethylenglykol, 31,0g g (0,23 Mol) Trimethylolpropan, 572,0 g (3,44 Mol) Terephthalsäure und 38,5 g (0,23 Mol) Isophthalsäure verestert. Als zweite Stufe werden 94,0 g (0,57 Mol) Isophthalsäure und 54,0 g (0,37 Mol) Adipinsäure zugegeben. Der nach dem in Beispiel 1 beschriebenen Verfahren erhaltene Polyester hat eine Säurezahl von 51 mg KOH/g, eine ICI-Schmelzviskosität bei 160 °C von 32 Pas und einen TG (DSC) von 58 °C. Die Carboxyl-Funktionalität ist 2,4.

### Beispiel 4 : Bis (β-hydroxyethyl)adipamat

348 g (2 Mol) Dimethyladipat und 244 g (4 Mol) Ethanolamin werden unter N₂-Atmosphäre in einem Reaktionsgefäß, ausgestattet mit einem Rührer, Thermometer und Destillationsaufsatz auf 110 °C erwärmt und während 15 Minuten unter Rückfluß umgesetzt. Anschließend wird bei der gleichen Temperatur die Umsetzung unter Entfernung des abgespaltenen Methanols während ca. 3 Stunden fortgesetzt und im Anschluß daran die Temperatur auf ca. 148 °C erhöht. Der Inhalt des Reaktionsgefäßes wird dann nach weiteren 90 Minuten unter N₂-Atmosphäre in eine Porzellanschale gegossen und nach dem Erstarren gemahlen. Das erhaltene Produkt hat einen Schmelzpunkt von 117 bis 120 °C und enthält noch ca. 1 % freies Ethanolamin.

### Herstellung der Pulverlacke

Für sämtliche in Tabelle 1 beschriebenen Pulverlacke wurde das folgende Herstellungsverfahren verwendet:

Die Formulierungsbestandteile werden in einem Henschelmischer bei 700 Upm während 30 Sekunden trocken gemischt und anschließend auf einem Buss-Co-Kneter (PLK 46) bei einer Manteltemperatur von 100 °C gekühlter Schnecke und einer Schneckenumdrehung von 150 Upm extrudiert. Das Extrudat wird gekühlt, gemahlen und auf < 90 µm gesiebt.

Die in Tabelle 2 aufgeführten erfindungsgemäßen Beschichtungsmassen mit matten Oberflächen werden durch intensives Mischen in einem Henschelmischer der verschiedenen fertigen Pulverlacke mit unterschiedlicher Funktionalität hergestellt. Die lacktechnischen Prüfungen und Beurteilung der Oberflächen erfolgen auf mit Trichlorethan entfetteten Stahlblechen (Dicke 0,8 mm) bei einer Einbrenntemepratur von 200 °C während 30 Minuten und einer Schichtdicke von 60 bis 80 µm.

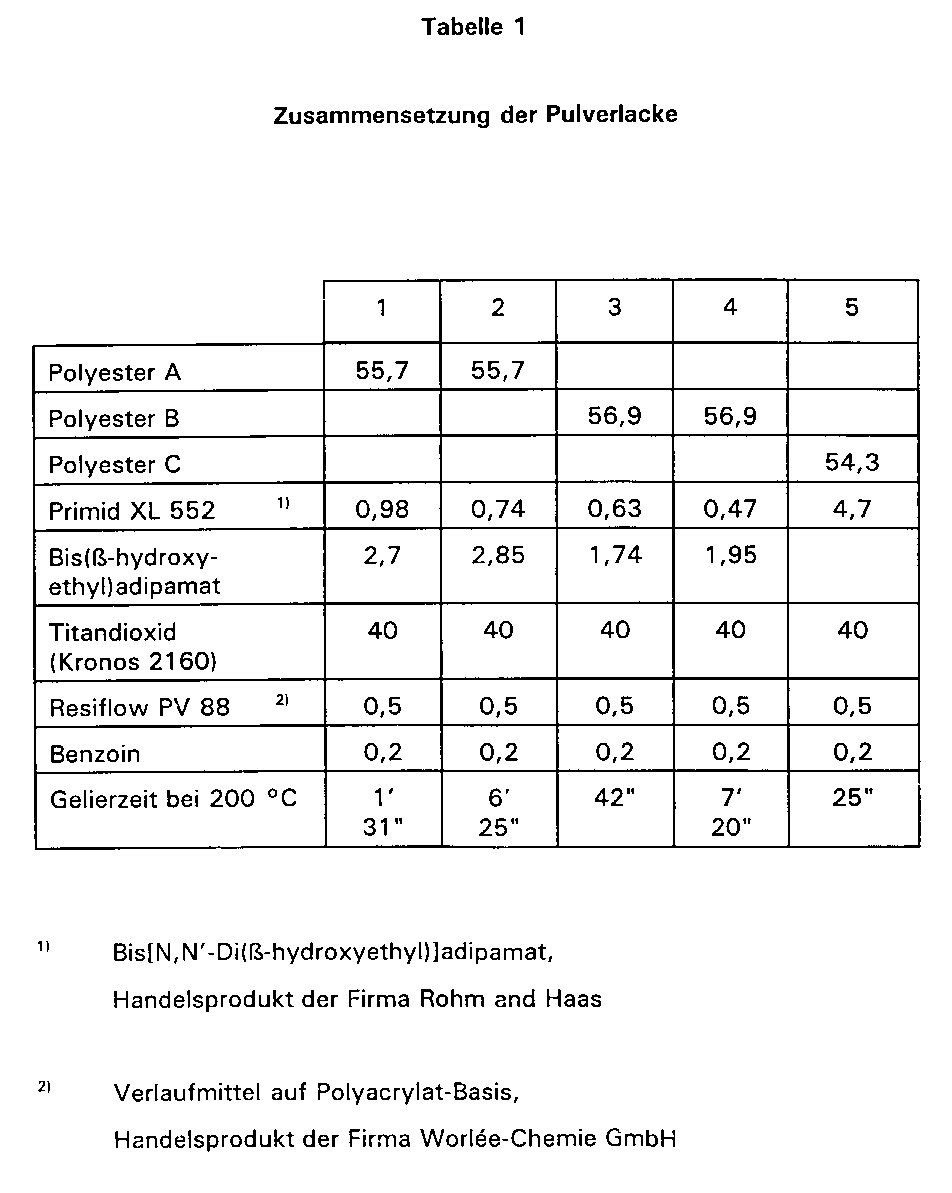

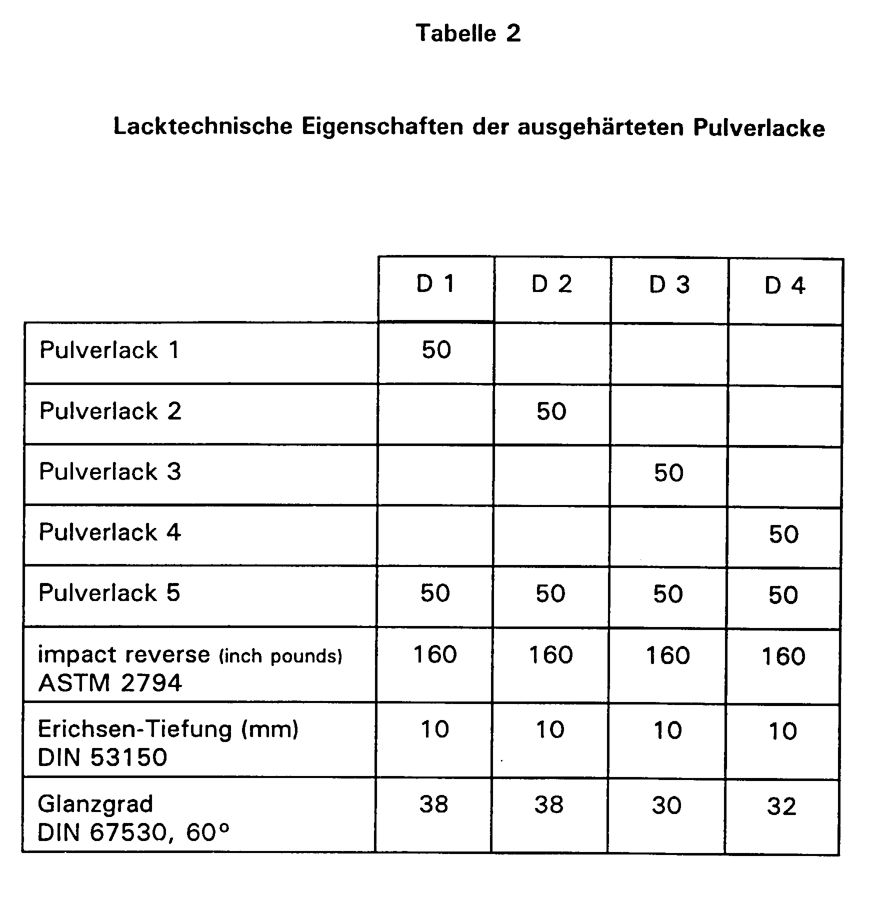

## Patentansprüche

1. Verfahren zur Herstellung von wärmehärtbaren, epoxidfreien Pulverlacken für Beschichtungen mit matten Oberflächen mit einem Glanzgrad nach DIN 67350 (60°) von < 40, bestehend aus einer Trockenmischung von mindestens zwei Pulverlacken, wobei man die Pulverlacke dadurch erhält,
daß man die für die Trockenmischung erforderlichen Pulverlacke in der Schmelze durch gemeinsame Extrusion der Komponenten (a), (b):
- einem carboxylterminierten Polyesterharz (a) mit einer Säurezahl von 20 bis 200 mg KOH/g, einer Glasumwandlungstemperatur von mindestens 40°C,
- einem b-Hydroxyalkylamid (b) mit mindestens zwei b-Hydroxyalkylamidgruppen pro Molekül und/oder Gemischen aus zwei- und mehrfunktionellen b-Hydroxyalkylamiden und gegebenenfalls weiteren, für Pulverlacke üblichen Zusätzen und Additiven, insbesondere Pigmenten, Füllstoffen, Benetzungs-, Verlaufs- oder Entgasungsmitteln, Hitze- oder UV-Stabilisatoren und dergleichen, in der Schmelze bei 80 bis 130°C, Abkühlung des Extrudats. Mahlen und Absieben auf eine Korngröße von < 90µm erhält, und man die getrennt so hergestellten Pulverlacke, die sich in der Anzahl der Carboxyl- und/oder β-Hydroxyalkylamidgruppen pro Molekül unterscheiden und pro Carboxylgruppe des carboxylterminierten Polyesterharzes (a) zwischen 0,5 bis 1,5 b-Hydroxyalkylamidgruppen zur Verfügung stehen, zusammen auf einem Intensivmischer zu der Trockenmischung weiterverarbeitet.

## Claims

1. Process for the preparation of heat-curable, epoxide-free coating powders for coatings with matt surfaces having a degree of gloss of <40 according to DIN 67530 (60°), and consisting of a dry blend of at least two coating powders,
the coating powders being prepared by
obtaining the coating powders required for the dry blending in the melt by coextrusion of the components (a), (b):
- a carboxyl-terminated polyester resin (a) with an acid number of 20 to 200 mg KOH/g, a glass transition temperature of at least 40 °C,
- a b-hydroxyalkylamide (b) with at least two two b-hydroxyalkylamide groups per molecule and/or mixtures of difunctional and polyfunctional b-hydroxyalkylamides,
and, optionally, further admixtures and additives commonly used for powder coatings, particularly pigments, fillers, wetting, leveling, and degassing agents, heat or UV stabilizers and the like, in the melt at 80 to 130 °C, cooling of the extrudate, grinding and screening to a grain size of <90 µm, and by joint further processing to the dry blend in a high-performance mixer, the coating powders thus separately prepared, which differ in the number of carboxyl and/or β-hydroxyalkylamide groups per molecule and have between 0.5 and 1.5 b-hydroxyalkylamide groups available per carboxyl group of the carboxyl-terminated polyester resin (a).

## Revendications

1. Procédé pour la préparation de peintures en poudre thermodurcissables exemptes d'époxyde pour revêtements à surface matte ayant une taux de luisance selon la norme DIN 67350 (60°) de < 40, constituées d'un mélange sec d'au moins deux peintures en poudre, dans lequel on obtient la peinture en poudre nécessaire au mélange sec en extrudant simultanément la masse fondue des composants (a), (b) :
- une résine polyester (a) terminée par un groupement carboxyle ayant un indice d'acidité de 20 à 200 mg de KOH/g et une température de transition vitreuse de au moins 40°C,
- un β-hydroxyalkylamide (b) ayant au moins deux groupements β-hydroxyalkylamide par molécule et/ou des mélanges de β-hydroxyalkylamides bi- ou multi-fonctionnels
et optionnellement d'autres adjuvants et additifs courants pour les peintures en poudre, et plus particulièrement des pigments, matières de remplissage, matières de réticulation, d'écoulement ou de dégazage, agents stabilisateurs de chaleur ou d'UV et similaires, dans la masse à des températures de 80 jusqu'à 130°C, en refroidissant le produit d'extrusion, en le broyant et le tamisant à une taille de grains de < 90 µm, et en transformant ultérieurement en un mélange sec, par mélange dans un mélangeur intensif, les peintures en poudre ainsi obtenues séparément, qui se distinguent de par leur nombre de groupements carboxyle et/ou β-hydroxyalkylamide par molécule, et qui présentent entre de 0,5 jusqu'à 1,5 groupements β-hydroxyalkylamide disponibles par groupement carboxyle de la résine polyester (a) terminée par un groupement carboxyle.
